# EUROPEAN PATENT SPECIFICATION

(11) **EP 2 936 633 B1**
(45) Date of publication and mention of the grant of the patent: **02.11.2016**
(21) Application number: 13821505.8
(22) Date of filing: 18.12.2013
(51) Int. Cl.: H02G 1/08

(54) **METHOD AND APPARATUS FOR THE INSTALLATION OF CABLES OR PIPES IN TUNNELS**
VERFAHREN UND VORRICHTUNG ZUR MONTIEREN VON KABEL UND ROHREN IN TUNNEL.
MÉTHODE ET DISPOSITIF POUR INSTALLATION DES CÂBLES ET TUYEAUX DANS DES TUNNELS.

(30) Priority: 20.12.2012 GB 201222992
(43) Date of publication of application: 28.10.2015
(73) Proprietor: Balfour Beatty PLC, London SW1V 1LQ (GB)
(72) Inventor: VINES, Mark, Derby Derbyshire DE21 7BG (GB)
(74) Representative: Ertl, Nicholas Justin
(86) International application number: PCT/GB2013/053341
(87) International publication number: WO 2014/096819

(56) References cited:
- EP-A1- 0 905 433
- EP-A2- 0 251 907
- DE-A1- 19 940 474
- GB-A- 2 468 883

## Description

### Field of the invention

This invention relates to the installation of cables or pipes in tunnels (or other ducts).

The installation of cables in tunnels presents many different problems as a result of the restricted space (both within the tunnel and the access to the tunnel) and the significant weight of the cables. The cables need to be secured at regular intervals, and an amount of sag needs to be provided between the securing points, to allow for expansion of the cable.

The known installation method uses a significant amount of manual handling, and has tensioned bond wires near the operator, which can present a security risk. Known cable installation methods include so-called hand pulling, nose pulling and bond pulling. Bond pulling is most suitable for long runs of heavy cables.

The invention relates to an apparatus and method for improving the efficiency of the cable installation process.

GB 2 468 883 relates to an earlier design of cable installation machine of the applicant. It discloses an apparatus which can at one end position a cable or pipe into its desired position, and at the other end apply a desired sag before fixing the cable/pipe in position. The apparatus can thus be driven along the cable performing the positioning and sagging in a single sequence. The cable sagging arm enables a controlled degree of sagging to be applied, which can be made uniform for the different sections of cable.

The apparatus of GB 2 468 883 can be driven bidirectionally in the tunnel, but it has a cable fixing arrangement at one end and a cable sagging arrangement at the other end. This means the installation method that can be followed is unidirectional and is linked to the cable insertion direction.

There are instances where cables need to be introduced mid-way along a tunnel, so that the cable installation process needs to be carried out in both directions from the mid-way insertion location.

### Summary of the invention

According to the invention, there is provided an apparatus for installing cables or pipes in tunnels as claimed in claim 1.

The apparatus comprises a motorised vehicle having a cable/pipe positioning arm at each end of the vehicle which is controllable to move a cable/pipe from a temporary installation position to a final installation position, wherein each cable/pipe positioning arm is associated with and spaced from a cable/pipe sagging arm which is controllable to apply a desired amount of sagging to a length of cable/pipe between adjacent final installation positions.

By having cable positioning arms at each end, the apparatus can pull the cable in either direction, and the sagging arm is behind the positioning arm when the machine is travelling in the direction of the installation procedure.

There can be a shared cable sagging position in the middle of the machine. Thus, both positioning arms can be associated with the same sagging arm. However, this implies a longer machine. Thus, the apparatus preferably has a first end half and a second end half, wherein each end half has a cable/pipe positioning arm and a cable/pipe sagging arm. Thus, each end has both cable positioning and cable sagging functionality, for full bidirectional operation. This enables the distance between the positioning and sagging arms to be more than half the length of the vehicle, for example near the full length of the vehicle.

Each end of the vehicle can have a cable/pipe positioning arm on each side of the vehicle. This enables cables/pipes to be fitted to either side of the tunnel, without needing to alter the direction faced by the vehicle.

A cable/pipe sagging arm can also be on each side of the vehicle for the same reason.

### Brief description of the drawings

An example of the invention will now be described in detail with reference to the accompanying drawings, in which:
Figure 1 shows a typical tunnel cross section for a 3m diameter tunnel;
Figure 2 shows how the cables are to be mounted on support structures;
Figure 3 shows how a cable is provided to the tunnel via an access shaft;
Figure 4 shows the equipment used to tow the cable into the tunnel in more detail;
Figure 5 shows a tug, cables, support structure, I-beam and hanger inside the tunnel;
Figure 6 shows a cable in a temporary position at the start of the securing method of the invention;
Figure 7 shows the apparatus performing the towing operation;
Figure 8 shows a transfer process for positioning the cable for fixing;
Figure 9 shows a cable sagging process;
Figures 10 and 11 show one version of the previously proposed apparatus, in side view in Figure 10 and in end view in the tunnel in Figure 11;
Figure 12 shows the apparatus of the invention in plan view;
Figure 13 shows the apparatus of the invention during a first part of the process;
Figure 14 shows the apparatus of the invention during a second part of the process;
Figure 15 shows the apparatus of the invention during a third part of the process; and
Figure 16 shows the apparatus of the invention in side view.

### Detailed description

The invention relates to the installation of cables or pipes in tunnels, and in particular relates to a motorised vehicle used for the installation. The description below is for the preferred use of the apparatus for installing electrical cables. The vehicle of the invention enables bidirectional cable pulling and installation and in independent directions.

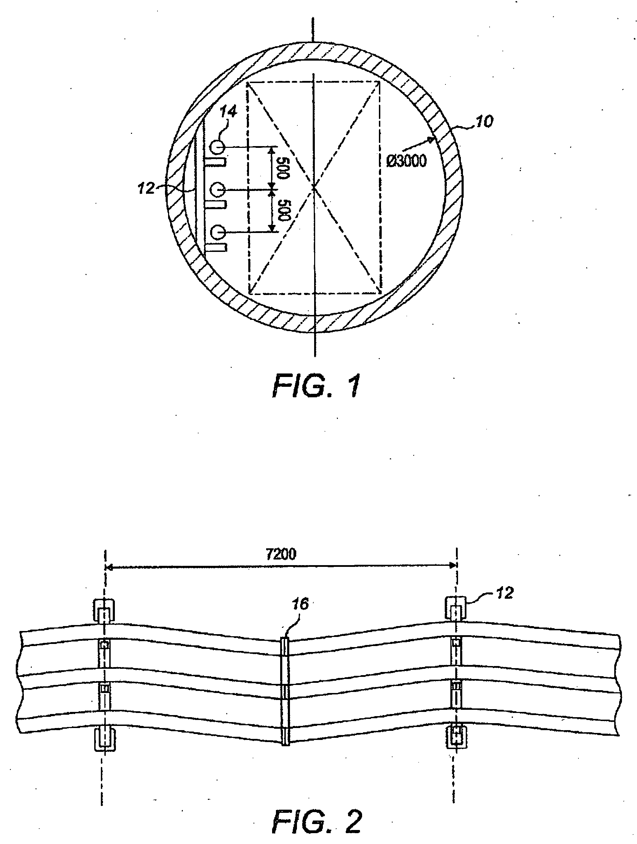

Figure 1 shows a typical tunnel cross section for a 3m diameter tunnel 10. A side of the tunnel has a cable support structure 12 with mounting positions for three cables 14, as shown.

Figure 2 shows how the cables are to be mounted on the support structures 12. The support structures are bolted to the tunnel wall, spaced 7.2m along the tunnel length. The cables are mounted with cable cleats, and the cables are desired to have a controlled amount of sag, to permit expansion. The sag should be the same for all three cables so that short circuit straps 16 can be fitted mid-way between the support locations.

The cable can for example comprise a high power electric 400kV cable. Common tunnel diameters are 3m and 4m, and the cables can be provided in lengths of the order of 1 km, with typical diameters up to 160mm, although the invention is not limited to any particular cable sizes. A 1100m length typically weighs approximately 55 tonnes (50 Kg/m).

The previously proposed installation method will now be described. The apparatus of this invention carries out essentially the same operation but the apparatus is designed to allow full bidirectional capability.

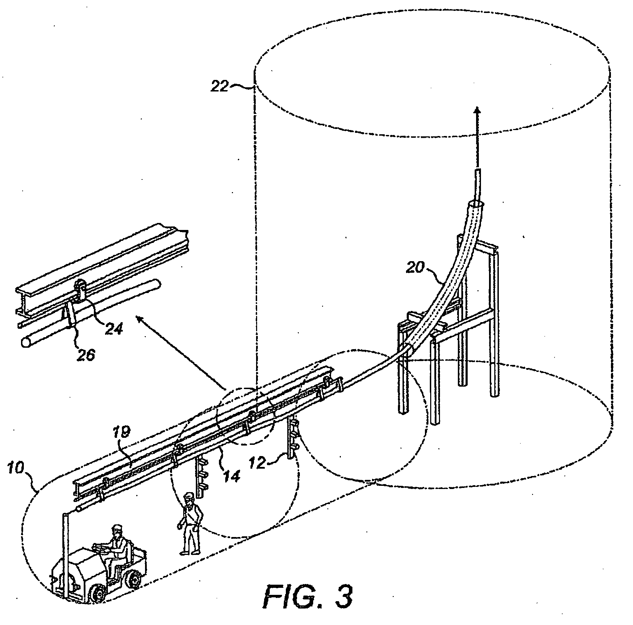

A two stage mounting operation is provided. In a first stage shown in Figure 3, the cable is lowered into the tunnel and is tugged into position. As the cable is advanced along the tunnel, it is suspended in a temporary position suspended from the tunnel roof. In particular, a support I-beam 19 typically runs along the tunnel roof.

A cable guiding structure 20 facilitates entry of the cable into an access shaft 22. The access shaft can comprise a 1.5m x 2m opening, which may be approximately 5m long. The tunnel also has a working envelope of approximately 2m x 1.5m so that there is space for the passage of staff around the working envelope. As the cable is advanced along the tunnel, rollers 24 are fitted over the I-beam 19 with cable hangers 26 that support the cable 14.

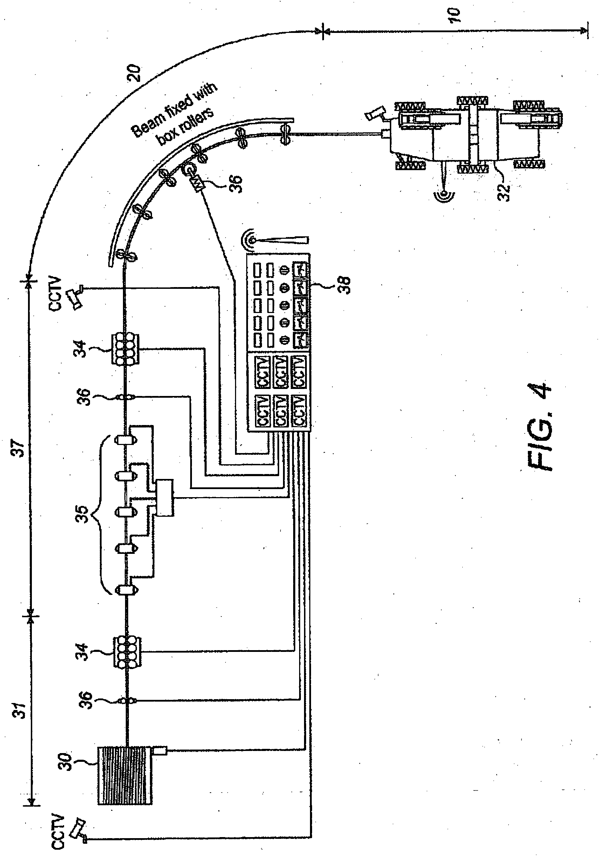

The equipment used to tow the cable into the tunnel into this temporary position is shown in more detail in Figure 4.

The cable is offloaded from a drum 30 in an offload area 31. In addition to being pulled by the tug 32, the cable is driven by caterpillars 34 and electric rollers 35 in region 37. Various load sensors 36 are used for feedback purposes. Feedback from the sensors as well as CCTV cameras is provided to a control module 38. Thus, the cable is lowered using controlled motorised rollers which control the rate of cable advance. The tunnel typically has a minimum tunnel bend radius of 250m.

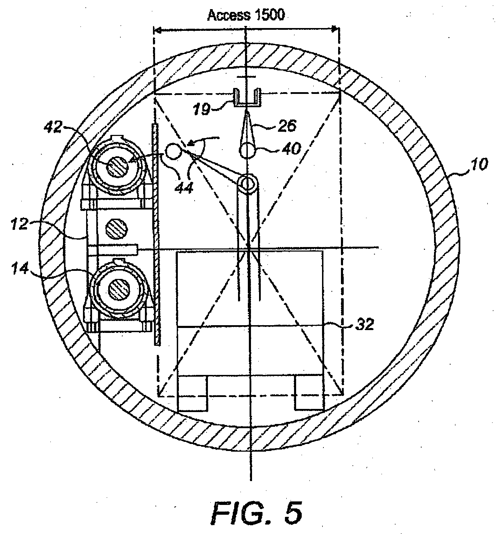

Figure 5 shows the tug 32, cables 14, support structure 12, I-beam 19 and hanger 26 inside the tunnel.

The previously proposed apparatus provides a design of tug which can perform the towing task explained above, and this aided by a traction control system. In addition, the design can also perform cable movement from the temporary suspended position 40 to the desired supported position 42, namely the transfer represented by arrow 44. In addition, the apparatus can provide a desired amount of sag between adjacent support structures 12.

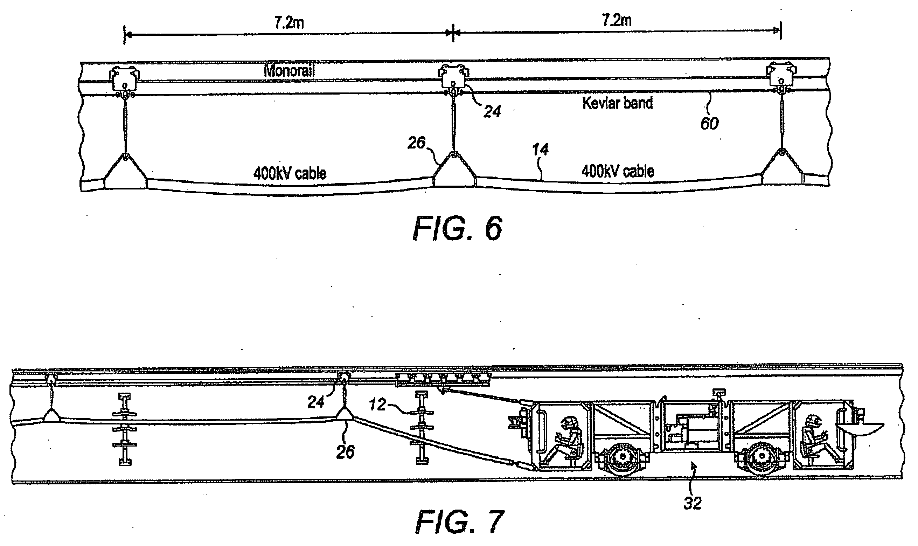

Figure 6 shows the cable in its temporary position. The rollers 24 are spaced by Kevlar bars 60 so that the regular spacing of the rollers 24 is maintained when they are pulled along the I-beam from the entry point of the cable. There may for example be hundreds of the rollers 24 along the length of the cable. When towing the cable, the bars 60 function as the primary tension members rather than the cable. This towing is shown in Figure 3 and also in Figure 7, and the cable is also pushed from the access shaft end by one of the caterpillars. The towing is typically carried out at walking pace, for example 3km/hr.

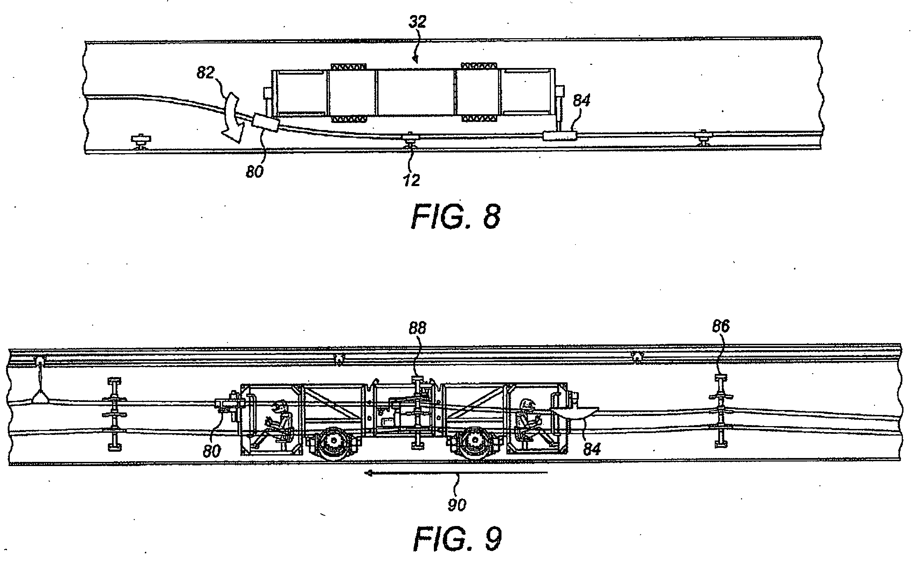

When the cable is in its temporary position along its full length, the device of the invention performs the transfer and sagging process. The transfer process is shown schematically in Figure 8.

The apparatus used is a motorised vehicle. In the previously proposed apparatus, a cable positioning arm 80 is at one end of the vehicle which is controllable to move a cable from the temporary position to a final installation position, as shown by arrow 82. A cable sagging arm 84 is at the other end of the vehicle which is controllable to apply a desired amount of sagging to a length of cable between adjacent support structures 12.

This process is shown more clearly in Figure 9. The cable positioning arm 80 comprises a roller arrangement for surrounding the cable on the end of an arm. The arm has adjustable length and is rotatable about an elongate axis of the vehicle, so that the movement of arrow 44 in Figure 5 can be provided to the cable.

After a first portion of the cable has been moved from the temporary installation position to the final installation position it is secured in place, for example as shown at location 86. A second portion of the cable is also moved from the temporary installation position to a final installation position using the cable positioning arm, as shown at location 88. At the position shown in Figure 9, the cable sagging arm 84 is in position to apply a desired amount of sagging to the length of cable between the first and second locations 86,88. The cable at the second location 88 is then secured to the securing point on the wall of the tunnel to retain and fix the sagging amount that has been set.

The rollers of the cable position arm surround the cable, and the free end of the cable is fed through the opening defined by the rollers. The cable positioning arm thus provides support for the cable for the entire operation. As the vehicle 32 advances along the tunnel (in direction 90), the cable hangers are removed, to allow the cable to be moved to the support structures 12. The cable is elevated to enable release of the cable hanger, before the cable is moved to the support structure. The cable sagging arm comprises a guide arrangement for applying a downward sagging force to the cable or for lifting the cable if required.

The distance along the tunnel axis between the cable sagging arm and the cable positioning arm is preferably at least equal to the distance between final installation positions. The distance is preferably approximately equal to the distance between supports 12. This means that the cable sagging arm has reached the position where cable sagging is controlled when the cable positioning arm is in a suitable position for positioning the cable at the next support 12 (as shown in Figure 9).

The cable installation and sagging functions are alternated. The machine travels a distance corresponding to the pitch between installation points (e.g. 7.2m) then remains stationary for one cable installation and one cable sagging operation.

The amount of sag can be controlled by measurement, for example marking the desired sag on the side wall of the tunnel, for example with 195 - 205mm of sag from the horizontal. The cable positioning arm and the cable sagging arm are interchangeable so that the device can be driven in both directions.

In the example shown in Figure 9, the vehicle has five sections; a central motor section, two axle unit sections and two end cab sections. This modular design enables the sections to be lowered into the access shaft 22 (Figure 3) individually, and they can be assembled at the base of the access shaft. A heavy duty crane system is used to lower the modules down the access shaft. More generally, the vehicle can comprise at least three sections which are adapted to be assembled within the tunnel.

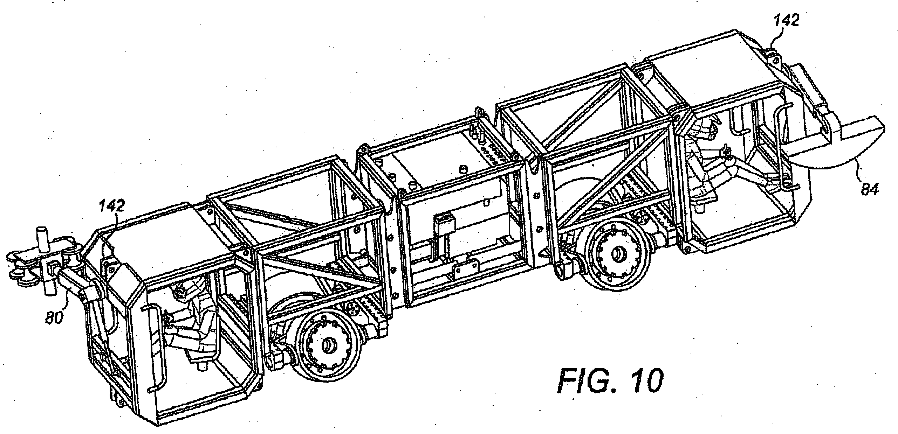

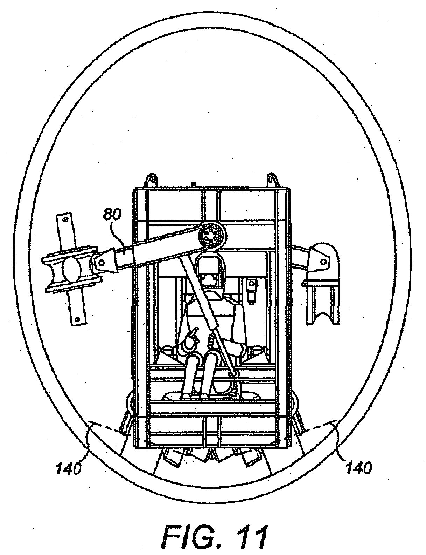

Figures 10 and 11 show one preferred version of the previously proposed vehicle more clearly, in side view and in end view in the tunnel. These figures show that the wheeled axle units each comprise two wheels (for example of 700mm diameter and 300mm width) having rotation axes 140 which can be adjusted, such that the wheels can be positioned for rolling on a flat surface or for rolling on opposite inclines. The axle units can thus be set for different tunnel diameters. A two or four wheel steering system can be provided. A tow point 142 is used for the initial towing operation

Figure 11 shows most clearly how the positioning arm enables the cable to be moved between any two positions in the tunnel cross section, by combining linear and rotational control. The same two degrees of freedom can be provided in the sagging arm 84, and a downward force can be applied by rotating the arm once the cable has been engaged.

The cable securing method can be carried out by driving the vehicle along the tunnel, with manual removal of the hangers. The vehicle can be designed so that the cable positioning of one section of cable and the cable sagging of another section are at the same vehicle position. This provides an efficient process, with the vehicle advanced in steps, and at each step a dual positioning and sagging operation is carried out. By controlling the sagging to be the same for multiple cables (installed one after the other) cable ties can more easily be fitted.

The machine is bi-directional in operation and requires an operator in each cab in order to allow the machine to move, except in an Emergency recovery mode where a key operated override switch will allow a single operator to control all functions of the machine without interruption by any safety override system.

In normal operation, the two operator control stations conform to a master / slave protocol where only one of the operators has control of the traction power and he will only be able to drive the machine in the direction in which he faces.

In order to make the machine travel in the opposite direction he must hand over master control to the operator in the other cab.

Similarly, the master operator will have control of the steering of the wheels at his end of the machine. Part of the procedure for handing over control to the other operator is to set these wheels to the straight ahead position and to engage a steering lock.

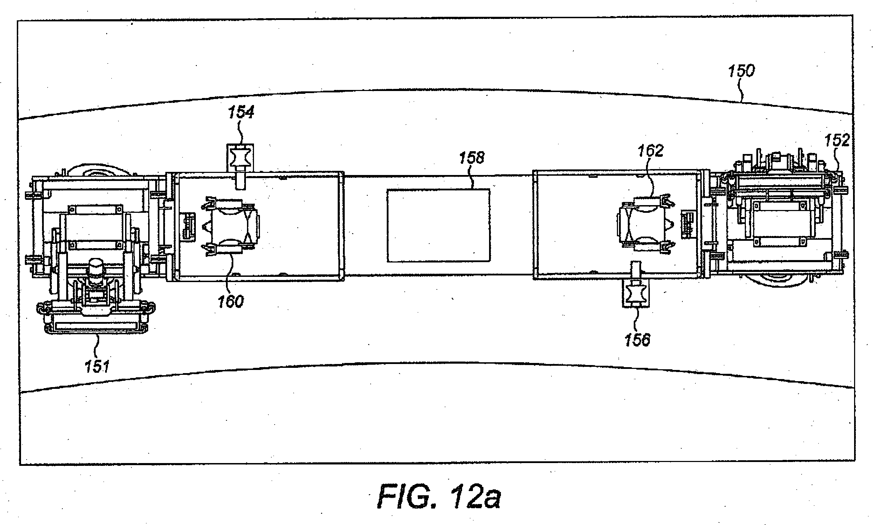

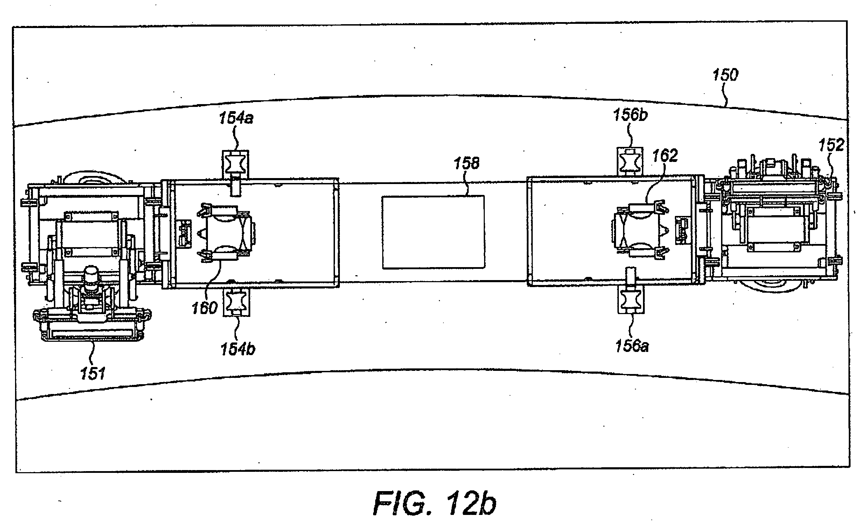

This invention provides a more adaptable apparatus. Two examples are shown, one in Figure 12(a) and one in Figure 12(b).

Figures 12(a) and 12(b) shows the apparatus in plan view within a tunnel 150.

The machine is again bi-directional but can also perform the cable fixing and sagging operations in either direction of movement. For this purpose, all of the controls and the machine functionality are mirrored about the centre of the machine. The bi-directional ability provides significant flexibility, especially when installing cables in a tunnel of significant length with multiple delivery shafts into which the cable is delivered.

The direction of travel and therefore the direction in which the cable is hauled through the tunnel can be dependent on many factors and without the available space within the tunnel environment to manoeuvre and turn, bi-directional control is important. This design enables the direction of cable insertion and the direction of cable fixing independent, and this adds flexibility and increases the number of installations for which the apparatus is suitable,

The principle objective of the machine, as with the previous version is to satisfy both the cable delivery and installation; hauling the cable to the desired position before manipulating the cable into its final installed position.

The apparatus has two manipulating arms 151,152 with one at each end of the machine.

The example of Figure 12(a) has two sagging rollers 154,156, again with one essentially at each end of the machine. The example of Figure 12(b) has two sagging rollers at each end, so that one pair 154a,154b is at one end and the other pair 154a,154b is at the other end.

For cable installation in one direction, one manipulating arm and one sagging arm at opposite ends are used as a pair, and the other manipulating arm and sagging arm are not used. For cable installation in an opposite direction, the other manipulating arm and the other sagging arm are used as a pair, with the first manipulating arm and sagging arm not used. The engine unit 158 is shown in the centre, and there are two operator cabins 160,162 with one at each end, as in the previous version.

As in the previous version, the manipulating arm has three main functions; (i) For hauling the cable to the desired position. A gripper assembly is anchored to the end of the manipulating arm, which securely grasps a towing attachment that incorporates a load cell. A bond is secured from the towing attachment to the monorail cable delivery system (MCDS) which suspends the cable from beneath on wheeled trolleys, thus allowing the cable to be delivered through the tunnel without any contact with the tunnel wall itself. The manipulating arm directs the required towing force through the MCDS bond as opposed to directing the force through the cable itself. By having two manipulating arms, one positioned at either end of the machine, the machine can haul cable with either manipulating arm depending on the cable delivery direction.

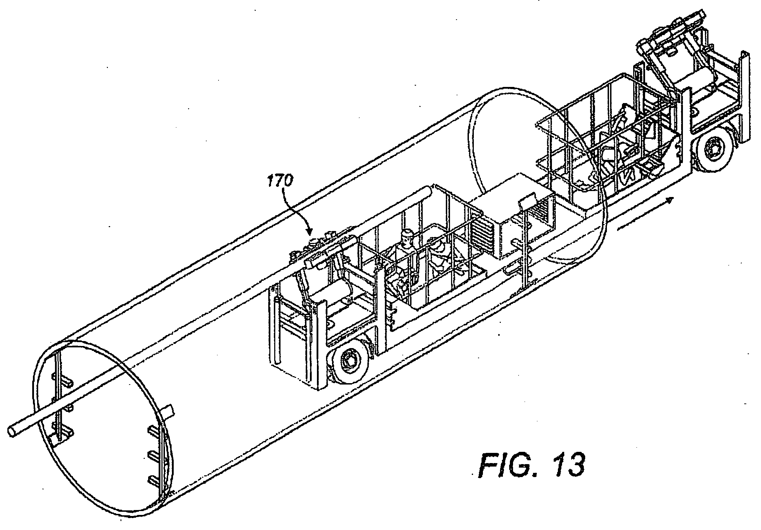

Figure 13 shows the apparatus hauling the cable from left to right. The machine will not apply any force directly to the cable, and the manipulating arm is instead anchored to the monorail cable delivery system not shown in Figure 13. The cable gripping is shown at position 170, using the manipulating arm.
(ii) Manipulating the cable from the delivered height suspended from the monorail to the required installation height and position i.e. above and adjacent to the steel support brackets that line the tunnel wall. The machine travels beneath the suspended cable in the opposite direction to the direction in which the cable was hauled through the tunnel. Positioning the manipulating arm at an appropriate angle allows the cable to be threaded into position i.e. the gripper assembly can secure the cable within its grasp, however will not clamp the cable and prevent the cable passing through the guiding mechanism.

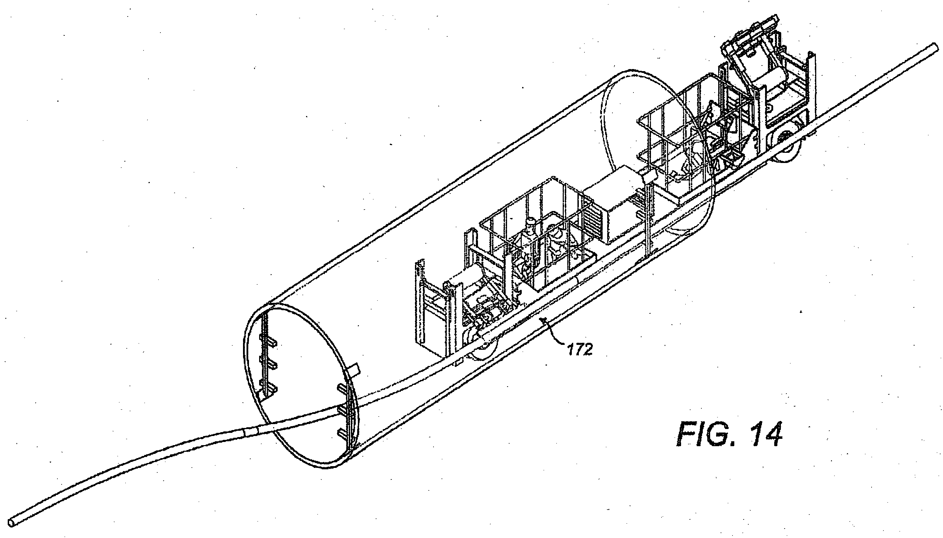

Figure 14 shows the manipulating arm manoeuvring the cable to the desired installation height at location 172. Once the cable is in the correct plane, the machine will thread the remaining cable.
(iii) During the sagging operation, the manipulating arm positions the gripper assembly around the cable and applies a suitable gripping force to the cable to enable the machine to apply a longitudinal force to the cable. The manipulating arm remains stationary and fixed at the appropriate angle and the machine will travel very slowly (and short distance) in the required direction to introduce sufficient slack into the cable. The manipulating arm works in conjunction with the sagging roller that applies a downward vertical force to the cable.

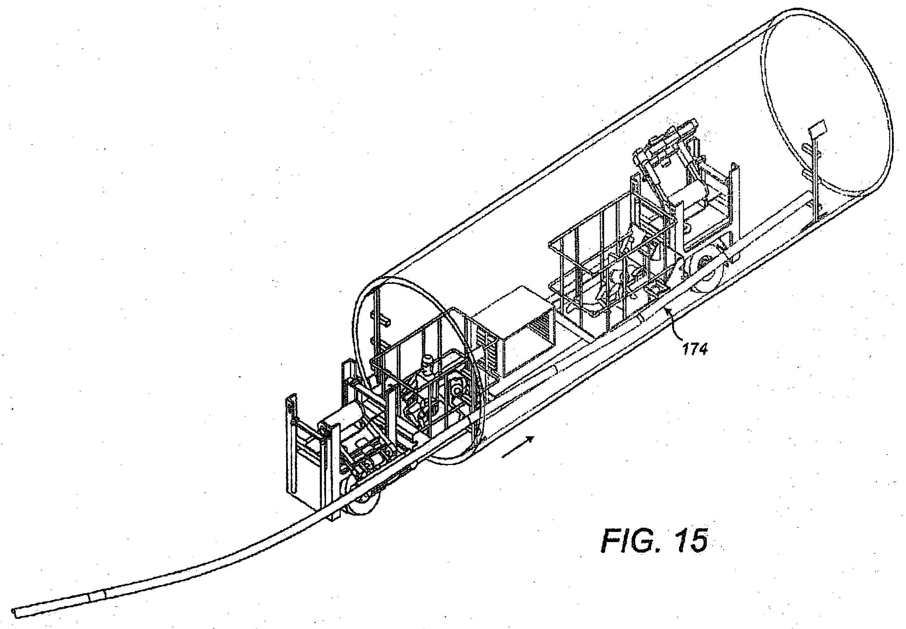

Figure 15 shows the sagging roller positioned directly above the cable at position 174. A platform of the operator cabin can be raised and lowered with the sagging roller fixed to the cabin platform. With the operator platform in the lowered position, the roller lowers with the platform and the correct sag is introduced into the cable.

As described above, the apparatus has two operating platforms that house all of the controls to operate the drive and cable manipulating functions. Each operator platform is associated with a cable manipulating arm and roller.

In the example of Figure 12(b), the operator platform includes two sagging arm and roller assemblies per platform. This then allows the apparatus to introduce sag into the cables in circuits on either side of the machine. The retractable and adjustable arms are mounted to the operator platforms and have both manual and mechanised control. Height adjustment to accommodate the correct phase is conducted manually and set. The fine adjustment and the process of introducing the sag is controlled by the hydraulic vertical and horizontal placement of the operator platform.

The arm/roller rotates about a vertical axis through 90 degrees so that it can be retracted or laterally deployed. When laterally deployed, it is ready to introduce the required sag. The operator has full control of the sagging displacement.

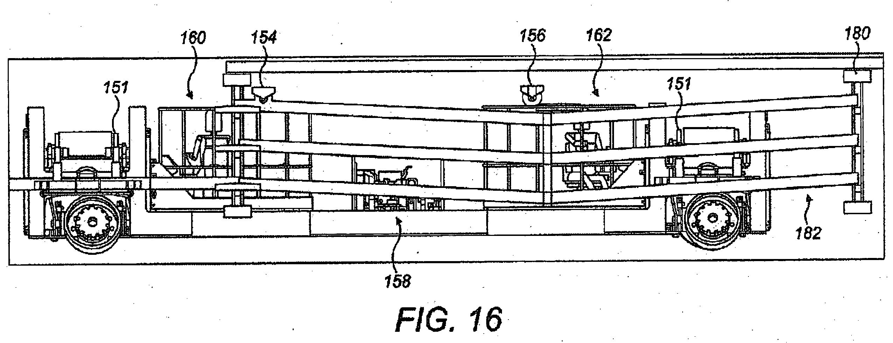

Figure 16 shows the machine in side view, using the same references as in Figure 12. The cable support bracket 180 is also shown as well as the cables 182.

The apparatus has the ability to pull cable into the tunnel without the requirement for a monorail beam. The manipulating arm can position itself horizontally and pull the cable through and past the steel brackets whilst the cable is supported by cable rollers mounted to the cable brackets.

The apparatus is preferably a 4 wheel drive and 4 wheel steer machine. Various proximity sensors and tilt sensors can be incorporated to measure the machine position relative to objects within the tunnel and the tunnel itself. These sensors prevent the machine from striking foreign objects/tunnel furniture/people. The apparatus can typically work in tunnel diameters of 3m - 4m, although it can be designed for tunnels down to 1.5m diameter, and install cable circuits (of any voltage) on both sides of the tunnel.

The machine has a modular design. There is the central engine module, and platform modules upstream and downstream of the central module. The platform modules each carrying one or two cable/pipe sagging arms as explained above. Positioning modules are also upstream and downstream of the central module, and each positioning module carries a cable/pipe positioning arm.

In the example shown, each cable/pipe positioning arm is movable between opposite lateral sides of the vehicle (as seen in Figure 11) so that only one is needed even to install cables on both sides. However, each positioning module can have a cable/pipe positioning arm on each opposite lateral side of the vehicle.

The machine can be petrol/diesel powered or it can be battery powered.

Various additional safety measures are disclosed in GB2 4768 883, which can equally be applied to this version of the apparatus.

The invention provides a modular design of vehicle which offers versatility, and allows implementation of a semi-automated cable sagging process, and which reduces health and safety risks associated with alternative methods of introducing sagging into the cables. The process is more efficient and can thus reduce operation times.

The above description relates to the installation of electrical cables. However, the same apparatus can be used for pipes for carrying gases or fluids or indeed any pipe-shaped objects.

Various modifications will be apparent to those skilled in the art.

## Claims

1. An apparatus for installing cables or pipes in tunnels, comprising a motorised vehicle 32 having a cable/pipe positioning arm 80 at each end of the vehicle which is controllable to move a cable/pipe from a temporary installation position to a final installation position, wherein each cable/pipe positioning arm is associated with and spaced from a cable/pipe sagging arm 84 which is controllable to apply a desired amount of sagging to a length of cable/pipe between adjacent final installation positions.

2. An apparatus as claimed in claim 1, comprising a first end half and a second end half, wherein each end half has a cable/pipe positioning arm 80 and a cable/pipe sagging arm 84, with the cable/pipe positioning arm at one end associated with the cable/pipe sagging arm at the other end.

3. An apparatus as claimed in claim 1 or 2, wherein each end of the vehicle has a cable/pipe positioning arm 80 on each side of the vehicle.

4. An apparatus as claimed in claim 1 or 2, wherein each end of the vehicle has a cable/pipe sagging arm 84 on each side of the vehicle.

5. An apparatus as claimed in any preceding claim, comprising a modular design, where in there is a central engine module, and platform modules upstream and downstream of the central module, the platform modules each carrying a cable/pipe sagging arm 84.

6. An apparatus as claimed in claim 5, wherein each platform module carries a cable/pipe sagging arm 84 at each lateral side.

7. An apparatus as claimed in claim 5 or 6, comprising positioning modules upstream and downstream of the central module, each positioning module carrying a cable/pipe positioning arm 80.

8. An apparatus as claimed in claim 7, wherein each cable/pipe positioning arm 80 is movable between opposite lateral sides of the vehicle.

9. An apparatus as claimed in 80 claim 7, wherein each positioning module has a cable/pipe positioning arm 80 on each opposite lateral side of the vehicle.

## Patentansprüche

1. Vorrichtung zum Installieren von Kabeln oder Rohren in Tunneln, umfassend ein motorisiertes Fahrzeug 32 mit einem Kabel-/Rohrpositionierungsarm 80 an jedem Ende des Fahrzeugs, der gesteuert werden kann, um ein Kabel/Rohr von einer temporären Installationsposition zu einer finalen Installationsposition zu bewegen, wobei jeder Kabel-/Rohrpositionierungsarm einem Kabel-/Rohrsenkungsarm 84, der steuerbar ist, um den gewünschten Betrag an Senkung für eine Länge von Kabel/Rohr zwischen benachbarten finalen Installationspositionen anzuwenden, zugeordnet ist und von diesem beabstandet ist.

2. Vorrichtung nach Anspruch 1, umfassend eine erste Endhälfte und eine zweite Endhälfte, wobei jede Endhälfte über einen Kabel-/Rohrpositionierungsarm 80 und einen Kabel-/Rohrsenkungsarm 84 verfügt, wobei der Kabel-/Rohrpositionierungsarm an einem Ende dem Kabel-/Rohrsenkungsarm am anderen Ende zugewiesen ist.

3. Vorrichtung nach Anspruch 1 oder 2, wobei jedes Ende des Fahrzeugs über einen Kabel-/Rohrpositionierungsarm 80 an jeder Seite des Fahrzeugs verfügt.

4. Vorrichtung nach Anspruch 1 oder 2, wobei jedes Ende des Fahrzeugs über einen Kabel-/Rohrsenkungsarm 84 an jeder Seite des Fahrzeugs verfügt.

5. Vorrichtung nach einem der vorstehenden Ansprüche, umfassend ein modulares Design, wobei ein zentrales Motormodul und dem zentralen Modul vorgeschaltete und nachgeschaltete Plattformmodule vorhanden sind, wobei die Plattformmodule jeweils einen Kabel-/Rohrsenkungsarm 84 tragen.

6. Vorrichtung nach Anspruch 5, wobei jedes Plattformmodul einen Kabel-/Rohrsenkungsarm 84 an jeder seitlichen Seite trägt.

7. Vorrichtung nach Anspruch 5 oder 6, umfassend dem zentralen Modul vorgeschaltete und nachgeschaltete Positionierungsmodule, wobei jedes Positionierungsmodul einen Kabel-/Rohrpositionierungsarm 80 trägt.

8. Vorrichtung nach Anspruch 7, wobei jeder Kabel-/Rohrpositionierungsarm 80 zwischen gegenüberliegenden seitlichen Seiten des Fahrzeugs beweglich ist.

9. Vorrichtung nach Anspruch 7, wobei jedes Positionierungsmodul über einen Kabel-/Rohrpositionierungsarm 80 an jeder gegenüberliegenden seitlichen Seiten des Fahrzeugs verfügt.

## Revendications

1. Appareil pour l'installation de câbles ou de tuyaux dans des tunnels comprenant un véhicule motorisé 32, doté d'un bras de positionnement de câble / tuyau 80 à chaque bout du véhicule, pouvant être commandé pour déplacer un câble / tuyau d'une position d'installation provisoire à une position d'installation finale, à chaque bras de positionnement de câble / tuyau correspondant un bras de fléchissement de câble / tuyau 84, dont il est espacé, ce dernier pouvant être commandé pour appliquer un degré de fléchissement désiré à une longueur de câble / tuyau entre positions d'installation finales adjacentes.

2. Appareil selon la revendication 1, composé d'une première moitié d'extrémité et d'une deuxième moitié d'extrémité, chaque moitié possédant un bras de positionnement de câble / tuyau 80 et un bras de fléchissement de câble / tuyau 84, au bras de positionnement de câble / tuyau à une extrémité étant associé le bras de fléchissement de câble / tuyau à l'autre extrémité.

3. Appareil selon la revendication 1 ou 2, chaque extrémité du véhicule possédant un bras de positionnement de câble / tuyau 80 de chaque côté du véhicule.

4. Appareil selon la revendication 1 ou 2, chaque extrémité du véhicule possédant un bras de fléchissement de câble / tuyau 84 de chaque côté du véhicule.

5. Appareil selon une quelconque des revendications précédentes, comprenant une conception modulaire, dans laquelle se trouve un module de moteur central, ainsi que des modules de plate-forme en amont et en aval du module central, les modules de plate-forme portant chacun un bras de fléchissement de câble / tuyau 84.

6. Appareil selon la revendication 5, chaque module de plate-forme portant un bras de fléchissement de câble / tuyau 84 de chaque côté latéral.

7. Appareil selon la revendication 5 ou 6, comprenant des modules de positionnement en amont et en aval du module central, chaque module de positionnement portant un bras de positionnement de câble / tuyau 80.

8. Appareil selon la revendication 7, chaque bras de positionnement de câble / tuyau 80 pouvant être déplacé entre des côtés latéraux du véhicule.

9. Appareil selon la revendication 7, chaque module de positionnement étant muni d'un bras de positionnement de câble / tuyau 80 de chaque côté latéral opposé du véhicule.
